Europäisches Patentamt

European Patent Office

Office européen des brevets

(11) Publication number: **0 195 510**
**B1**

# EUROPEAN PATENT SPECIFICATION

(45) Date of publication of patent specification: **13.12.89**

(21) Application number: **86300977.5**

(22) Date of filing: **13.02.86**

(51) Int. Cl.⁴: **B 05 B 13/02**

(54) Spraying machine with a rotating worksupport table.

(30) Priority: **09.03.85 GB 8506167**

(43) Date of publication of application:
**24.09.86 Bulletin 86/39**

(45) Publication of the grant of the patent:
**13.12.89 Bulletin 89/50**

(84) Designated Contracting States:
**AT BE CH DE FR IT LI LU NL SE**

(56) References cited:
**DD-A- 36 664**
**DE-A-2 425 698**
**DE-B-1 172 161**
**DE-B-1 584 813**
**GB-A-2 041 914**

(73) Proprietor: **SPRAYMATIC COMPANY LIMITED**
**Unit 1 Stringes Lane**
**Willenhall West Midlands WV13 1LD (GB)**

(72) Inventor: **Pritchard, Alfred Maurice**
**Unit 1 Stringes Lane Willenhall**
**West Midlands, WV13 1LD (GB)**

(74) Representative: **Yelland, William Alan et al**
**H.N. & W.S. SKERRETT Rutland House 148,**
**Edmund Street**
**Birmingham B3 2LQ (GB)**

Courier Press, Leamington Spa, England.

**Description**

This invention concerns rotary spraying table machines, of a kind comprising a housing supporting a rotary table, workpiece supports mounted on the table, and drive means to rotate the table.

There are known machines which comprise a housing supporting a rotary table, workpiece supports mounted rotatably on the table, drive means below the table to rotate the table for moving the workpiece supports sequentially to a spraying station to enable articles (workpieces) supported on the workpiece supports to be sprayed with a fluent material e.g. a liquid, powder or a mixture thereof, in known manner, and spindle drive means to rotate spindles rotatably mounted on the table for rotating the workpiece supports. Excess fluent material falls, flows or is swept or drawn across the periphery of the rotary table for collection, for example, in a collector or at the periphery of the machine. However, such known machines have disadvantages in that a proportion of the excess material is not collected, and contaminates the floor, the machine and ancilliary apparatus, especially where the machines are being cleaned for changeover to handle other articles or other fluent materials.

The machine disclosed in DD-A-36664 is similar in some respects to such known machines, in that it provides a table having rotatable workpiece supports, and has a collector having a duct to return excess fluent material to a receptacle.

GB-A-2041914 discloses a machine, for spraying ceramic articles with glaze, which comprises a housing below a rotary table provided with workpiece supports, and drive means to rotate the table to convey workpieces to a spraying station for spraying with fluent material by spraying equipment. In this machine the table is of annular grid-like form, is suspended from an overhead shaft, and comprises a central substantially conical part provided at its outer periphery with a plurality of radially extending and circumferentially spaced apart support struts the latter mounting a plurality of annular metal strips with edges uppermost, the strips being radially spaced apart to define through passes therebetween. The arrangement is such that the radially outermost and innermost strips have their upper edges extending above the upper edges of the intermediate strips, and the strips lie in a plane sloping downwardly in a radially inward direction. The strips serve as fixed workpiece supports, and in use the spraying equipment sprays glaze both downwards onto the articles and upwards, through the passages onto the articles. Excess glaze falls onto a static inclined floor surface below the table. The workpieces or articles are loaded and unloaded at a single station by an operator. In order to prevent the articles sticking to supporting surfaces during firing of the glaze, it is necessary to remove glaze from the lowermost portions of the surfaces of the articles.

An object of the invention is to provide a machine which can be constructed so as to reduce such contamination and to facilitate recovery of the excess material, for example, for recycling.

According to the present invention there is generally provided a rotary spraying table machine comprising a housing below a rotary table provided with workpiece supports, drive means below the table to rotate the table to convey workpieces to a spraying station for spraying with fluent material by spraying equipment, spindle drive means to rotate spindles rotatably mounted on the table for rotating the workpiece supports; and a collector having a duct to receive excess fluent material for conveying said material to a receptacle, and characterised in that the machine is provided with cleaning equipment located over the table at a cleaning station for spraying cleaning fluid which drains onto the part of the table moving from an unloading station to a separate loading station; in that the rotary table has a raised peripheral brim to retain both excess fluent material and the cleaning fluid; in that a drain is let into and is carried by the table to convey fluent material and cleaning fluid through the table into the interior of the housing; and in that the collector is mounted in the housing below said drain and the discharge duct extends through the housing to convey the mixture of fluent material and cleaning fluid out of the housing.

According to the present invention there is more particularly provided a rotary spraying table machine comprising a housing below a rotary table provided with workpiece supports, and drive means to rotate the table to convey workpieces to a spraying station for spraying with fluent material by spraying equipment, and characterised in that the machine is provided with or constructed for use with cleaning equipment located or locatable over the table at a cleaning station for spraying cleaning fluid which drains onto the part of the table moving from an unloading station to a separate loading station; in that the rotary table comprises a solid horizontal main web of disc form having a raised brim upstanding from the periphery of the main web so that the rotatable table serves as a receptacle to retain both excess fluent material and the cleaning fluid; in that a drain is let into and is carried by the main web of the table to convey fluent material and cleaning fluid through the table into the interior of the housing; and in that a static trough shaped annular collector is mounted in the housing below said drain and around part of said drive means, and a discharge duct extends from the collector through the housing to convey fluent material and cleaning fluid out of the housing.

The cleaning equipment is preferably in the form of automatic pressure washing and air blasting equipment.

The peripheral brim is preferably in the form of a rigid member integral with or secured to a main web of the rotary table so as to serve as a stiffener, and said rigid member preferably comprises an upper portion, which serves as the brim, and a lower portion, which serves as a skirt surrounding a space between the main web and the housing.

The collector is preferably in the form of an annular upwardly open trough located around a drive shaft and bearing assembly located substantially centrally in the housing to support and rotate the rotary table. A scraper or stirrer may be provided to displace material accumulating in the trough.

The main web and rigid member may be of steel but are preferably of plastics material or reinforced plastics material, and the main web may be braced by stiffeners or by a spider below the main web.

The cleaning equipment preferably comprises a cover supported above the table by the housing and liquid spraying devices to spray liquid onto the workpiece supports as they move to within the cover, and a lower member of the cover extends downwards to below the top of the brim so as to terminate within the compass of the brim to constrain said fluid to fall onto the table.

The workpiece supports may be mounted on spindles supported by bearing housings which are secured to the table and extend upwards to above the level of the top of the brim, to prevent fluent material on the table flowing into the bearing housings.

The invention also provides spraying apparatus comprising a machine of the invention and spraying equipment, wherein the spraying equipment includes a cover, deflector, baffle or other member providing a surface arranged to obstruct sprayed material passing from above the rotary table and to guide sprayed material impinging on said surface to fall onto said table.

The invention will be described further, by way of example, with reference to the accompanying diagrammatic drawings, wherein:-

FIGURE 1 shows parts of a machine of the invention in vertical cross-section; and

FIGURE 2 is a plan view of spraying apparatus including the machine shown in FIGURE 1.

The rotary spraying table machine shown in the drawings generally comprises a housing 10, a rotary table 12, drive means 13 and, in this embodiment, cleaning equipment 14.

The housing 10 includes a light peripheral surround 15 of panels 16 mounted on a framework 17 which is supported on castors 18.

The rotary table 12 is primarily constructed from reinforced plastics materials; and has a circular main web 20, a rigid peripheral member 21 bonded to the periphery of the web 20, a central stiffening disc 22 bonded to the upper surface 23 of the main web 20, and a hub 24 bonded centrally to the underside of the main web 20. The main web 20 supports a circular array of workpiece supports 25 which are located on spindles 26 and provided with shrouds 27 to cover upper portions of spindle bearing housings 28 secured to the main web 20. Each spindle 26 has a drive pulley 29.

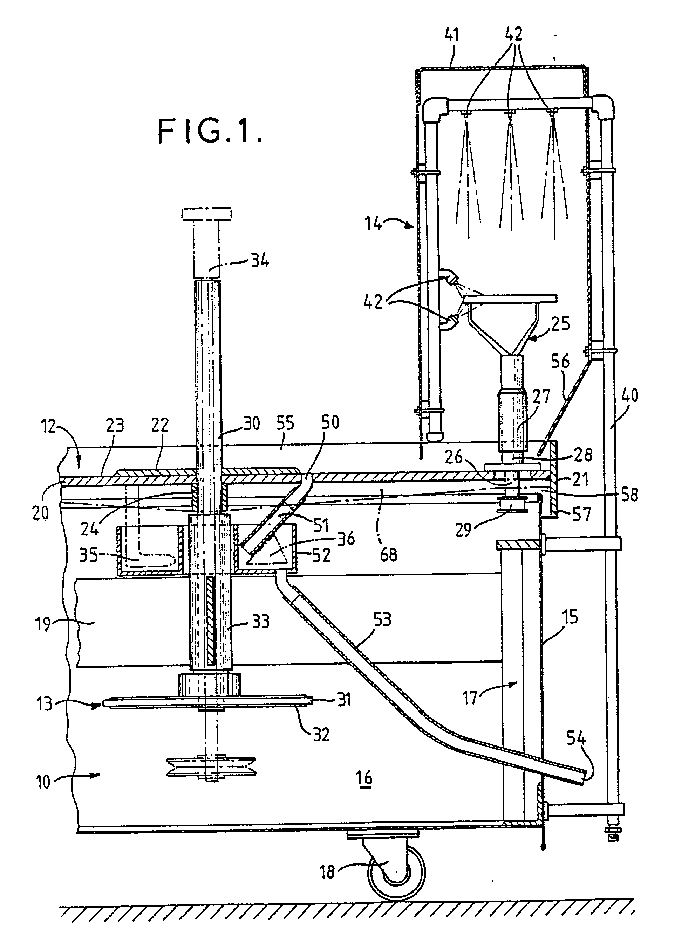

The drive means 13 includes a motor and transmission unit (not shown) within the housing 10 to drive a table drive shaft 30 via a belt 31 and pulley 32. The hub 24 and shaft 30 are supported by bearings (not shown) located by a bearing housing of a bearing assembly 33. The bearing housing is rigidly supported by internal members 19 of the framework 17. The machine is also provided with spindle drive means, which may be connected to said motor, to drive the pulleys 29. The shaft 30 may be hollow to guide an equipment shaft 34, indicated in broken lines in FIGURE 1, which shaft 34 may be linearly and/or arcuately movable by actuators (not shown).

The cleaning equipment 14 comprises a stanchion pipe 40, secured to the framework externally of the housing, a cover 41 supported by the stanchion pipe 40, and liquid spraying devices, such as cleaning fluid nozzles 42 on the pipe 40 within the cover 41, at a cleaning station as shown in FIGURE 1. A second pipe and further nozzles (not shown) may similarly be provided to supplement the pipe 40 and nozzles 42 or to provide air jets within the cover.

Referring especially to FIGURE 1, the machine is adapted to recover excess sprayed fluent materials, and for this purpose a drain 50 is let into the main web 20 to support a short drain duct 51, an upwardly open annular collector 52, of trough form, is supported around the bearing housing upon the internal members 19 of the framework, a discharge duct 53 extends from the collector 52 and through the housing 10 to an external outlet 54, the peripheral member 21 has an upper portion 55 upstanding above the main web 20 to provide a raised peripheral brim around the table, and the cover 41 has a skirt panel 56 which extends downwards and inwards to terminate below the top of the brim 55 and adjacent the inside face of the brim.

The drive means 13 also serves to move material displacement means 19 for preventing accumulative settlement of material in the collector 52. The displacement means 19 may comprise a scraper or stirrer 35, which extends downwards from the table or outwards and downwards from the hub 24; and, in addition to or as an alternative to the stirrer, a stirrer or scraper 36 which is attached to or forms part of the duct 51.

The peripheral member 21 also has a lower portion 57 which extends downwards at the periphery of the table to surround a gap 58 between the housing and the table; and the member 21 serves as a peripheral stiffener for the table.

A fillet, not shown, may be provided to radius the junction of the upper surface of the main web and the inside face of the brim.

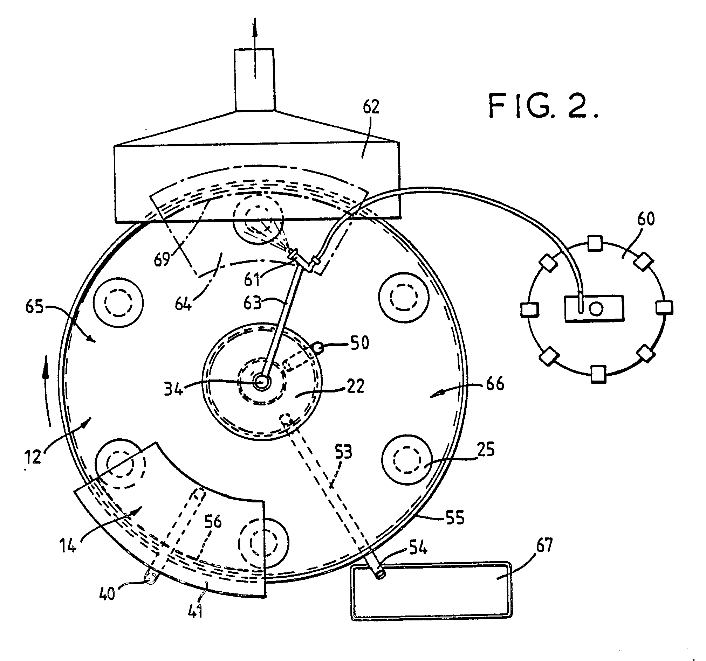

The machine may form part of spraying apparatus as shown diagrammatically in FIGURE 2, which apparatus includes spraying equipment 60, of known form, to supply fluent material to one or more spray guns 61 at a spraying station within a spraying booth 62, which may be of known form, the size, configuration and construction of the booth being determined, for example, to suit the nature of the fluent material being sprayed. The gun or guns 61 may be supported on a cross member 63 on the shaft 34.

For spraying non-hazardous fluent materials, e.g. glaze for ceramic articles, a cover 64, similar to the cover 41, may be provided at the spraying station, the spray guns or nozzles being situated for spraying within the cover 64, indicated in chain broken lines in FIGURE 2; and said cover 64 may have an extractor duct 68 to remove contaminated air and to draw air into the cover through the open ends of the cover 64. The cover preferably provides a surface 69 which receives overspray material and constrains such material to drain down onto the table 12 within the brim, as described with reference to the cover 41.

In use, articles are loaded onto the supports 25 at a loading station 65, pass to the spraying station whereat the supports 25 are rotated, and are removed at an unloading station 66. Thereafter, the supports 25 are pressure washed, and optionally dried, at the cleaning station by the cleaning equipment 14 prior to moving to the loading station 65.

Excess fluent material and cleaning fluid falling onto the table drains through the drain, collector and duct to the outlet, e.g. for collection in a receptacle 67, for subsequent processing to recover glazing material for re-use. Where hazardous fluent materials or cleaning fluids are concerned the outlet may be relocated to discharge within the booth and the interior of the housing may be force ventilated into the booth.

It will be readily appreciated that the table of the machine· is particularly easy to clean; that the table, being relatively light, is easily lifted off the machine; and that said risks of contamination are greatly reduced.

The invention is not confined to details hereinbefore disclosed and many variations and modifications are possible within the scope of the invention as defined by the appended claims. For example, the table may include or be partially supported by a metal spider 68 indicated in broken lines in FIGURE 1.

## Claims

1. A rotary spraying table machine comprising a housing (10) below a rotary table (12) provided with workpiece supports (25), drive means (13) below the table to rotate the table to convey workpieces to a spraying station for spraying with fluent material by spraying equipment (60, 61), and spindle drive means to rotate spindles (26) rotatably mounted on the table for rotating the workpiece supports; and a collector (52) having a duct (53) to receive excess fluent material for conveying said material to a receptacle (67), and characterised in that the machine is provided with cleaning equipment (14) located over the table at a cleaning station for spraying cleaning fluid which drains onto a part of the table moving from an unloading station (66) to a separate loading station (65); in that the rotary table has a raised peripheral brim (55) to retain both excess fluent material and the cleaning fluid; in that a drain (50) is let into and is carried by the table to convey fluent material and cleaning fluid through the table into the interior of the housing; and in that the collector (52) is mounted in the housing (10) below said drain (50) and the discharge duct (53) extends through the housing to convey the mixture of fluent material and cleaning fluid out of the housing.

2. A rotary spraying table machine comprising a housing (10) below a rotary table (12) provided with workpiece supports (25), and drive means (13) to rotate the table to convey workpieces to a spraying station for spraying with fluent material by spraying equipment (60, 61), and characterised in that the machine is provided with or constructed for use with cleaning equipment (14) located or locatable over the table at a cleaning station for spraying cleaning fluid which drains onto a part of the table moving from an unloading station (66) to a separate loading station (65); in that the rotary table comprises a solid horizontal main web (23) of disc form having a raised brim (55) upstanding from the periphery of the main web so that the rotatable table serves as a receptacle to retain both excess fluent material and the cleaning fluid; in that a drain (50) is let into and is carried by the main web of the table to convey fluent material and cleaning fluid through the table into the interior of the housing; and in that a static trough shaped annular collector (52) is mounted in the housing (10) below said drain · (50) and around part (33) of said drive means, and a discharge duct (53) extends from the collector through the housing to convey fluent material and cleaning fluid out of the housing.

3. A machine as claimed in Claim 2 and characterised in that the workpiece supports (25) are mounted on the spindles (26) supported by bearing housings (28) which are secured to the table (12) and extend upwards to above the level of the top of the brim (55), to prevent fluent material on the table flowing into the bearing housings (28), which spindles extend through the table to pulleys (29) driven below the table by spindle drive means.

4. A machine as claimed in Claim 1 and characterised in that the peripheral brim (55) is a rigid member (21) integral with or secured to a main web (23) of the rotary table (12) so as to serve as a stiffener, which rigid member (21) comprises an upper portion (55), which serves as the brim, and a lower portion (57), which serves as a skirt surrounding a space (58) between the main web (23) and the housing (10).

5. A machine as claimed in Claim 1, 2, 3 or 4 and characterised in that a scraper or stirrer (35, 36) extends into the trough collector (52) for displacing material accumulating in the trough collector (52).

6. A machine as claimed in any preceding claim and characterised in that the cleaning equipment (14) comprises a cover (41) supported above the table (12) by the housing (10) and liquid spraying devices (42) to spray liquid onto the workpiece supports (25) as they move to within the cover (41).

7. A machine as claimed in Claim 6 and characterised in that a lower member (56) of the cover (41) extends downwards to below the top of the brim (55) so as to terminate within the compass of the brim to constrain said fluid to fall onto the table (12).

8. A machine as claimed in Claim 5 or 6 and characterised in that the cleaning equipment (14) wherein air jets are provided within the cover (41).

9. A machine as claimed in any preceding claim and characterised in that the rotary table (12) is arranged so as to be liftable off the housing (10).

10. A machine as claimed in any preceding claim, and characterised in that, at the spraying station, the machine is provided with a cover (64), deflector, baffle or other member providing a surface (69) arranged to obstruct spraying material passing from above the rotary table (12) and to guide sprayed material impinging on said surface (69) to fall onto said table (12).

11. Spraying apparatus comprising a machine as claimed in any one of Claims 1 to 9, spraying equipment (60, 61) and a spraying booth (62) and characterised in that the spraying station is located within the booth; in that the interior of the machine is force ventilated into the booth.

12. Spraying apparatus comprising a machine as claimed in any one of Claims 1 to 10 and spraying equipment (60) and characterised in that the spraying equipment (60) includes at least one spray gun (61) mounted on a cross member (63) on a shaft (34) of the machine which shaft is linearly and/or arcuately movable.

**Patentansprüche**

1. Drehtisch-Spritzmaschine, enthaltend ein Gehäuse (10) unterhalb eines Drehtisches (12), der mit Werkstückhaltern (25) versehen ist, eine Antriebseinrichtung (13) unterhalb des Tisches, um den Tisch in Rotation zu versetzen, um Werkstücke zum Bespritzen mit fließfähigem Material mittels einer Spritzapparatur (60, 61) in eine Spritzstation zu bewegen, und mit Spindelantriebseinrichtungen, um Spindeln (26), die drehbar auf den Tisch gelagert sind, zum Drehen der Werkstückhalter in Rotation zu versetzen, und einen Sammler (52), der eine Leitung (53) aufweist, um überschüssiges fließfähiges Material aufzunehmen und dieses Material einem Behälter (67) zuzuführen, dadurch gekennzeichnet, daß die Maschine mit einem Reinigungsaggregat (14) ausgerüstet ist, die oberhalb des Tisches im Bereich einer Reinigungsstation angeordnet ist, um Reinigungsflüssigkeiten aufzusprühen, die auf einen Teil des Tisches abfließt, der sich von einer Entladestation (66) zu einer davon getrennten Beladestation (65) bewegt, daß der Drehtisch einen hochgezogenen umlaufenden Rand (55) zum Zurückhalten sowohl des überschüssigen fließfähigen Materials und der Reinigungsflüssigkeit aufweist, daß ein Ablauf (50) in den Tisch eingelassen ist und von diesem getragen wird, um fließfähiges Material und Reinigungsflüssigkeit durch den Tisch hindurch in das Innere des Gehäuses zu fördern, und daß der Kollektor (52) in dem Gehäuse (10) unterhalb des Ablaufs liegt und sich die Abflußleitung (53) durch das Gehäuse erstreckt, um das Gemisch aus fließfähigem Material und Reinigungsflüssigkeit aus dem Gehäuse zu fördern.

2. Drehtisch-Spritzmaschine, enthaltend ein Gehäuse (10) unterhalb eines Drehtisches (12), der mit Werkstückhaltern (25) versehen ist, eine Antriebseinrichtung (13), um den Tisch in Rotation zu versetzen, um Werkstücke zum Bespritzen mit fließfähigem Material mittels einer Spritzeinrichtung (60, 61) einer Spritzstation zuzuführen, dadurch gekennzeichnet, daß die Maschine ausgerüstet oder zur Benutzung mit einem Reinigungsaggregat (14) konzipiert ist, die oberhalb des Tisches zum Aufspritzen einer Reinigungsflüssigkeit angeordnet oder anordnenbar ist, die auf einen Teil des Tisches abfließt, der sich von einer Entladestation (66) zu einer getrennt davon angeordneten Beladestation (65) bewegt, daß der Drehtisch eine feste, scheibenförmige, horizontal liegende Hauptfläche (23) mit einem hochgezogenen Rand (55) aufweist, der von der Peripherie der Hauptfläche nach oben steht eo daß der Drehtisch als ein Behälter zum Zurückhalten sowohl von überschüssigem fließfähigem Material und der Reinigungsflüssigkeit dient, daß ein Ablauf (50) in die Hauptfläche des Tisches eingelassen ist und davon getragen wird, um fließfähiges Material und Reinigungsflüssigkeit durch den Tisch in das Innere des Gehäuses abfließen zu lassen, und daß ein stationärer, trog- und ringförmiger Sammler (52) in dem Gehäuse (10) unterhalb des Ablaufes (50) und um einen Teil (33) der Antriebseinrichtung herum angebracht ist und eine Abflußleitung (53) sich von dem Sammler durch das Gehäuse erstreckt, um fließfähiges Material und Reinigungsflüssigkeit aus dem Gehäuse abfließen zu lassen.

3. Eine Maschine nach Anspruch 2, dadurch gekennzeichnet, daß die Werkstückhalter (25) auf Spindeln (26) gelagert sind, die von Lagergehäusen (28) getragen werden, die an dem Tisch (12) befestigt sind und sich nach oben über das Niveau der Oberseite des Randes (55) erstrecken, um zu verhindern, daß sich auf dem Tisch befindendes fließfähiges Material in die Lagergahäuse (28) fließt, wobei die Spindeln sich durch den Tisch zu Antriebsscheiben (29) erstrecken, die unterhalb des Tisches von Spindelantrieben angetrieben werden.

4. Maschine nach Anspruch 1, dadurch gekennzeichnet, daß der umlaufende Rand (55) ein starres Element (21) ist, das einen integrierenden Bestandteil einer Hauptfläche (23) des Drehtisches (12) bildet oder an einer Hauptfläche (23) des Drehtisches (12) befestigt ist, derart, daß es als Versteifungselement dient, wobei das starre Element (21) einen oberen Abschnitt (55), der als der Rand dient, und einen unteren Abschnitt (57) umfaßt, der als eine Abschirmung dient, die einen Spalt (58) zwischen der Hauptfläche (23) und dem Gehäuse (10) umgibt.

5. Maschine nach Anspruch 1, 2, 3 oder 4, dadurch gekennzeichnet, daß sich ein Abstreifer oder Rührer (35, 36) in den trogförmigen Sammler (52) erstreckt, um sich in dem trogförmigen Sammler (52) akkumulierendes Material wegzuräumen.

6. Maschine nach einem der vorhergehenden Ansprüche, dadurch gekennzeichnet, daß das Reinigungsaggregat (14) eine Abdeckung (41), die oberhalb des Tisches (12) von dem Gehäuse (10) getragen wird, und Flüssigkeitssprüheinrichtungen (42) umfaßt, um Flüssigkeit auf die Werkstückhalter (25) aufzusprühen, während sie sich innerhalb der Abdeckung (41) bewegen.

7. Maschine nach Anspruch 6, dadurch gekennzeichnet, daß ein unterer Abschnitt (56) der Abdeckung (41) sich nach unten bis unterhalb der Oberseite des Randes (55) erstreckt, so daß er innerhalb des Bereichs des Randes endet, um dieses Fluid dazu zu bringen, auf den Tisch (12) zu fallen.

8. Maschine nach Anspruch 5 oder 6, dadurch gekennzeichnet, daß das Reinigungsaggregat (14) so gestaltet ist, daß es von dem Gehäuse (10) nach oben hin abhebbar ist.

9. Maschine nach einem der vorhergehenden Ansprüche, dadurch gekennzeichnet, daß der Drehtisch (12) von dem Gehäuse (10) abhebbar ist.

10. Maschine nach einem der vorhergehenden Ansprüche, dadurch gekennzeichnet, daß die Maschine im Bereich der Spritzstation mit einer Abdeckung (64) versehen ist, wobei ein Ablenker, eine Prallfläche oder ein anderes Element, eine Fläche (69) bilden, die dazu dient, Spritzmaterial, das von oberhalb des Drehtisches (12) kommt, einzudämmen, und um Spritzmaterial, welches auf diese Fläche (69) aufprallt, dazu zu bringen, auf diesen Tisch (12) zu tropfen.

11. Spritzvorrichtung, die eine Maschine nach einem der Ansprüche 1 bis 9, eine Spritzapparatur (60, 61) und eine Spritzkabine (62) umfaßt, dadurch gekennzeichnet, daß die Spritzstation sich innerhalb der Kabine befindet, und daß das Innere der Maschine zwangsläufig in die Kabine entlüftet wird.

12. Spritzvorrichtung, enthaltend eine Maschine nach einen der Ansprüche 1 bis 10 und eine Spritzapparatur (60), dadurch gekennzeichnet, daß die Spritzapparatur mindestens eine Spritzpistole (61) umfaßt, die auf einem Querstück (63) einer Welle (34) der Maschine gelagert ist, wobei diese Welle linear und/oder kurvenförmig bewegbar ist.

## Revendications

1. Machine de pulvérisation à plateau tournant, comprenant un bâti (10) au-dessous d'un plateau tournant (12) muni de supports de pièces à traiter (25), des moyens d'entraînement (13) au-dessous du plateau pour faire tourner celui-ci et amener les pièces à traiter dans un poste de pulvérisation où une matière fluide est projetée sur elles par un équipement pulvérisateur (60, 61), des moyens d'entraînement d'axes pour faire tourner des axes (26) montés à rotation sur le plateau et destinés à faire tourner les supports de pièces à traiter, et un collecteur (52) muni d'un conduit (53), pour recevoir l'excédent de matière fluide et diriger cette matière vers un récipient (67), caractérisée en ce que la machine est munie d'un équipement de nettoyage (14) disposé au-dessus du plateau au niveau d'un poste de nettoyage, pour pulvériser un fluide de nettoyage qui s'écoule sur la partie du plateau qui passe entre un poste de déchargement (66) et un poste séparé de chargement (65), en ce que le plateau tournant comporte un rebord périphérique surélevé (55) pour retenir à la fois l'excédent de matière fluide et le fluide de nettoyage, en ce qu'un tuyau de vidange (50) est encastré dans le plateau et est supporté par celui-ci pour diriger la matière fluide et le fluide de nettoyage à travers le plateau vers l'intérieur du bâti, et en ce que le collecteur (52) est monté dans le bâti (10) au-dessous dudit tuyau de vidange (50) et le conduit d'évacuation (53) traverse le bâti pour diriger le mélange de matière fluide et de fluide de nettoyage vers l'extérieur du bâti.

2. Machine de pulvérisation à plateau tournant, comprenant un bâti (10) au-dessous d'un plateau tournant (12) muni de supports de pièces à traiter (25) et des moyens d'entraînement (13) pour faire tourner le plateau et amener les pièces à traiter dans un poste de pulvérisation où une matière fluide est projetée sur elles par un équipement pulvérisateur (60, 61), caractérisée en ce qu'elle est munie d'un équipement de nettoyage (14) ou construite pour pouvoir être utilisée avec un tel équipement qui est disposé ou qui peut être disposé au-dessus du plateau au niveau d'un poste de nettoyage, pour pulvériser un fluide de nettoyage qui s'écoule sur la partie du plateau qui passe entre un poste de déchargement (66) et un poste séparé de chargement (65), en ce que le plateau tournant comprend un flasque principal horizontal (23) en forme de disque plein, muni d'un rebord surélevé (55) qui se dresse sur la périphérie du flasque principal, de telle manière que le plateau tournant serve de réceptacle pour retenir à la fois l'excédent de matière fluide et le fluide de nettoyage, en ce qu'un tuyau de vidange (50) est encastré dans le flasque principal du plateau et est supporté par celui-ci pour diriger la matière fluide et le fluide de nettoyage à travers le plateau vers l'intérieur du bâti, et en ce qu'un collecteur statique annulaire en forme de cuve (52) est monté dans le bâti (10) au-dessous dudit tuyau de vidange (50) et autour d'une partie (33) desdits moyens d'entraînement, et un conduit d'évacuation (53) s'étend à partir du collecteur à travers le bâti pour diriger la matière fluide et de fluide de nettoyage vers l'extérieur du bâti.

3. Machine selon la revendication 2, caractérisée en ce que les supports des pièces à traiter (25) sont montés sur des axes (26) supportés par des logements de palier (28) qui sont fixés au plateau (12) et s'étendent vers le haut jusqu'au-dessus du niveau du haut du rebord (55), afin d'éviter que la matière fluide qui est sur le plateau coule dans les logements de palier (28), ces axes traversant le plateau et portant, au-dessous du plateau, des poulies (29) entraînées par des moyens d'entraînement d'axes.

4. Machine selon la revendication 1, caractérisée en ce que le rebord périphérique (55) est un élément rigide (21) formé d'un seul tenant avec un flasque principal (23) du plateau tournant (12) ou fixé à ce flasque, de manière à servir de raidisseur, cet élément rigide (21) comprenant une partie supérieure (55), qui sert de rebord, et une partie inférieure (57) qui sert de jupe entourant un espace (58) entre le flasque principal (23) et le bâti (10).

5. Machine selon l'une quelconque des revendications 1 à 4, caractérisée en ce qu'un racloir ou agitateur (35, 36) pénètre dans la cuve collectrice (52) pour déloger la matière qui s'accumule dans cette cuve collectrice (52).

6. Machine selon l'une quelconque des revendications 1 à 5, caractérisée en ce que l'équipement de nettoyage (14) comprend un couvercle (41) supporté au-dessus du plateau (12) par le bâti (10) et des dispositifs pulvérisateurs de liquide (42) pour projeter un liquide sur les supports de pièces à traiter (25) tandis qu'ils passent dans le couvercle (41).

7. Machine selon la revendication 6, caractérisée en ce qu'un élément inférieur (56) du couvercle (41) s'étend vers le bas jusqu'au-dessous du haut du rebord (55), de manière à se terminer à l'intérieur des limites du rebord pour contraindre ledit liquide à tomber sur le plateau (12).

8. Machine selon la revendication 5 ou 6, caractérisé en ce que l'équipement de nettoyage (14) comporte des moyens pour produire des jets d'air à l'intérieur du couvercle (41).

9. Machine selon l'une quelconque des revendications 1 à 8, caractérisée en ce que le plateau tournant (12) est agencé de façon à pouvoir être retiré du bâti (10) par soulèvement.

10. Machine selon l'une quelconque des revendications 1 à 9, caractérisée en ce qu'au niveau du poste de pulvérisation, la machine est munie d'un couvercle (64), d'un déflecteur, d'un écran ou d'un autre élément comportant une surface (69) agencée de manière à faire obstacle au passage de matière pulvérisée depuis la région au-dessus du plateau tournant (12) et à guider la matière pulvérisée qui frappe cette surface (69) pour qu'elle tombe sur le plateau (12).

11. Dispositif de pulvérisation comprenant une machine selon l'une quelconque des revendications 1 à 9, un équipement de pulvérisation (60, 61) et une cabine de pulvérisation (62), caractérisé en ce que le poste de pulvérisation est situé dans la cabine et en ce qu'une ventilation forcée est créée à l'intérieur de la machine vers la cabine.

12. Dispositif de pulvérisation comprenant une machine selon l'une quelconque des revendications 1 à 10 et un équipement de pulvérisation (60), caractérisé en ce que l'équipement de pulvérisation (60) comprend au moins un pistolet pulvérisateur (61) monté sur un bras (63) sur un arbre (34) de la machine, arbre qui peut effectuer un mouvement linéaire et/ou angulaire.

EP 0 195 510 B1

FIG.1.

EP 0 195 510 B1

FIG. 2.

1